## Europäisches Patentamt

## European Patent Office

## Office européen des brevets

(19)

(11) Veröffentlichungsnummer: **0 265 538**
**B1**

(12) **EUROPÄISCHE PATENTSCHRIFT**

(45) Veröffentlichungstag der Patentschrift:
**03.01.90**

(51) Int. Cl.⁴: **B61K 9/06**

(21) Anmeldenummer: **86114939.1**

(22) Anmeldetag: **28.10.86**

(54) **Vorrichtung zum berührungslosen Messen der Bremsentemperaturen an vorüberfahrenden Eisenbahnwagen.**

(43) Veröffentlichungstag der Anmeldung:
**04.05.88 Patentblatt 88/18**

(45) Bekanntmachung des Hinweises auf die Patenterteilung:
**03.01.90 Patentblatt 90/1**

(84) Benannte Vertragsstaaten:
**AT CH DE FR GB IT LI SE**

(56) Entgegenhaltungen:
**EP-A- 0 041 178**
**FR-A- 1 387 241**

(73) Patentinhaber: **SIGNALTECHNIK GmbH,
Ernst-Sachs-Strasse 2, D-5400 Koblenz(DE)**

(72) Erfinder: **Berndt, Dietmar, Dr., im Baumstück 4,
D-5400 Koblenz(DE)**

(74) Vertreter: **Riecke, Manfred, Neuköllner Strasse 8,
D-6333 Braunfels(DE)**

**Beschreibung**

Die Erfindung betrifft eine Vorrichtung zum berührungsfreien Messen der Bremsentemperatur an vorüberfahrenden Eisenbahnwagen, bei der einem IR-Sensor durch eine vorgeschaltete Optik entlang einer durch den den Sensor und die Optik definierten Meßachse von den Bremsen bzw. dem Rad emittierte IR-Strahlen zugeleitet werden, wobei die schräg angeordnete Meßachse den Radkranz oberhalb der Schienenoberfläche trifft und Gleisschaltmittel zur Aktivierung der Meßvorrichtung vorgesehen sind, gemäß der EP-A1 0 041 178.

Es ist weiters bekannt, bei vorüberfahrenden Eisenbahnwagen die Temperatur der Bremsen bzw. des Radkranzes durch Detektion der von den Bremsen emittierten infraroten Wärmestrahlen zu messen. Verfahren und Vorrichtung zur Durchführung derartiger Messungen sind z.B. beschrieben in der DE-PS 23 43 904 und der weiteren dort zitierten Literatur.

In diesem Zusammenhang ist es auch bekannt, an den Gleisen Gleisschaltmittel anzuordnen, die beim Vorbeilaufen eines Rades Torimpulse abgeben und mit diesen die Meßvorrichtung aktivieren bzw. deaktivieren, wenn ein Rad in den Meßbereich ein- bzw. ausläuft. In bekannter Weise bestehen derartige Meßvorrichtungen im wesentlichen aus einem IR-Sensor mit vorgeschalteter Optik, die gemeinsam eine Meßachse definieren.

Ursprünglich waren die Bremsen an den Eisenbahnwagen alle von etwa der gleichen Konstruktion, nämlich Backenbremsen, so daß es möglich war, mit einer einzigen Art von Meßvorrichtung alle Bremsen bzw. Radkränze anzumessen.

Jedoch haben sich im Laufe der Zeit die unterschiedlichsten Bremssysteme und die unterschiedlichsten Bremsgeometrien entwickelt, so daß es heute praktisch nicht mehr möglich ist, alle möglicherweise in einem Zuge vorkommenden Bremsgeometrien mit einer einzigen Meßvorrichtung zuverlässig und mit definierter Zuordnung zum jeweiligen Rad, zu erfassen. Solch unterschiedliche Bremssysteme können beispielsweise sein: die herkömmlichen Backenbremsen, bei denen Bremsklötze auf dem Umfange der Lauffläche des Rades angreifen. Ferner außenliegende oder innenliegende Scheibenbremsen, bei denen das Rad selbst die Bremsscheibe darstellt, und schließlich noch die überaus leistungsfähigen innenliegenden Scheibenbremsen, bei denen eine oder mehrere gesonderte Bremsscheiben zwischen den Rädern auf der Radachse fest angeordnet sind.

Außerdem haben die Räder der Eisenbahnwagen die unterschiedlichsten Raddurchmesser und Achsabstände.

Der Erfindung liegt die Aufgabe zugrunde, ein Meßverfahren bzw. eine Meßvorrichtung anzugeben, mit dem bzw. der bei allen diesen verschiedenen Bremssystemen bzw. Bremsgeometrien - unabhängig vom Raddurchmesser und Achsabstand - mit einem einzigen Meßverfahren bzw. einer einzigen Art von Meßvorrichtung die jeweilige Bremsentemperatur zuverlässig erfaßt werden kann, und die gemessene Temperatur dem jeweils angemessenen Rad definiert zugeordnet werden kann.

Gemäß der Erfindung ist diese Aufgabe durch ein Meßverfahren bzw. eine Meßvorrichtung gelöst, das die im Anspruch angegebenen Merkmale aufweist.

Wie aus dem Anspruch ersichtlich, ist die Erfindung somit gelöst durch eine Vorrichtung, bei der

a) die Meßachse unter den angegebenen Winkeln auf die vorüberrollenden Räder gerichtet ist, und

b) bei dem das Verfahren der elektronischen Verlängerung der Aktivzeit der Messung angewendet wird.

Mit dieser Meßvorrichtung lassen sich alle heute gängigen Bremsentypen erfassen und unterscheiden.

Durch die Anmessung des Rades in einer Höhe von 1 cm bis 5 cm oberhalb der Schienenoberkante wird die Radkranztemperatur gemessen, und zwar sowohl dann, wenn das Rad mit den herkömmlichen Backenbremsen abgebremst wird, aber auch dann, wenn das Rad mit den technisch neueren Scheibenbremsen ausgerüstet ist, bei denen das Rad selbst die Bremsscheibe bildet oder die Bremsscheibe außen an dem Rad angebracht ist.

Ist auf der Radachse jedoch zwischen den Rädern eine besondere Scheibe als Bremsscheibe angeordnet, so läßt sich wegen der speziellen, angegebenen Winkelorientierung der Meßachse auch diese Bremsscheibe anmessen. Dieses ist möglich, weil die schräg aufwärts auf die Räder gerichtete Meßaches, die den Radkranz in der angegebenen Höhe von 1 - 5 cm trifft, die weiter zurückliegende Bremsscheibe etwa in einer mittleren Höhe abtastet, und zwar dann, wenn das Rad selbst bereits an der Meßachse vorübergelaufen ist. Zufolge der Kombination des angegebenen Seitenwinkels $\Omega$ von 7 - 18 Grad mit dem Höhenwinkel $\alpha$ von 10 bis 22 Grad "sieht" der Detektor entlang der Meßachse quasi von hinten-unten auf die Bremsscheibe und kann deren Temperatur erfassen, solange die Bremsscheibe durch die Meßachse läuft.

In diesem Zeitabschnitt ist das Rad selbst bereits aus dem Bereich der Gleisschaltmittel herausgelaufen, so daß die Meßvorrichtung bereits deaktiviert sein sollte. Gemäß der Erfindung wird die Aktivzeit der Meßvorrichtung jedoch durch eine elektronische Schaltung um einen Zeitabschnitt verlängert, der einen gewissen Prozentsatz derjenigen Zeit ausmacht, in welcher die Meßvorrichtung durch das am Gleisschaltmittel vorüberlaufende Rad aktiviert wurde. D.h. die Aktivzeit der Meßvorrichtung wird gegenüber der tatsächlich geschalteten Zeit elektronisch um einen Faktor N verlängert. Auf diese Weise ist es auch möglich, zu erkennen, ob die gemessene Temperatur vom Radkranz und somit von Backenbremsen oder von auf das Rad selbst einwirkenden Scheibenbremsen stammt, oder ob die Temperatur von einer besonderen Bremsscheibe zwischen den Rädern stammt, die ebenfalls mit Backen abgebremst wird. Tritt nämlich der Temperaturimpuls während der effektiven Schaltzeit der Gleisschaltmittel auf (= unmittelbare Aktivzeit der Meßvorrichtung), so ist eindeutig, daß der Impuls vom Radkranz stammt; tritt der Impuls dagegen erst in der elektronisch verlängerten Aktivzeit auf, so ist ebenso eindeutig, daß er von der besonderen Bremsscheibe zwischen den Rädern stammt.

Für bi-direktionalen Fahrbetrieb ist ein zweites Gleisschaltmittel, um den Winkel Omega versetzt, an der gegenüberliegenden Schiene desselben Gleises oder senkrecht in der Ebene projiziert an derselben Schiene wie das erste Gleisschaltmittel, zu installieren. Bei Anfahrt eines Zuges aus dieser zweiten Fahrtrichtung, ist das zusätzliche Gleisschaltmittel,bzw. der von ihm erzeugte Torimpuls, allein zuständig für die Temperaturauswertung der Bremsscheiben zwischen den Rädern. Erst nachdem dieses zusätzliche Gleisschaltmittel durchfahren ist, gerät das Rad in die Einflußlänge des ersten Gleisschaltmittels, das auch die Achszählung vornimmt und gleichzeitig wieder die Meßvorrichtung für die Temperaturauswertung des Rades (Backenbremsen oder Rad-Scheibenbremsen) aktiviert. Da durch weiter außen liegende, weitere Gleisschaltmittel, die Fahrtrichtung eines anfahrenden Zuges festgestellt werden kann, kann eine Auswahl getroffen werden, zu welchem Zeitpunkt welches Gleisschaltmittel die Meßvorrichtung zur Auswertung aktiviert. Dies ist durch geeignete elektronische Umschaltung möglich. Hiermit ist dann wieder eine eindeutige Zuordnung aller auftretenden Bremsentemperaturimpulse, von welcher Bremse sie auch stammen, zu einer definierten Achse möglich, die immer vom Zuganfang oder Zugende aus gezählt werden.

In der Zeichnung ist die Erfindung in einem Ausführungsbeispiel dargestellt. Es zeigen:

Fig. 1 schematisch die Vorrichtung mit einem Radpaar beim Einlaufen in das Gleisschaltmittel,
Fig. 2 die Vorrichtung nach Fig. 1 beim Auslaufen des Radpaares aus dem Gleisschaltmittel,
Fig. 3 eine Horizontalansicht auf den Radsatz in Fahrtrichtung, und
Fig. 4 eine Draufsicht auf das Radpaar.

In den Figuren sind mit 1a, 1b die Schienen eines Eisenbahngleises bezeichnet, die in bekannter Weise auf Schwellen 2 festgelegt sind.

Auf den Gleisen rollt ein Radpaar 3a, 3b eines nicht weiter gezeigten Eisenbahnwagens. Die Räder 3a, 3b sind durch eine Achse 4 fest miteinander verbunden, auf der zwischen den Rädern noch eine Bremsscheibe 5 fest angeordnet ist.

Für das Radpaar 3a, 3b sind Bremsmittel vorgesehen, die entweder aus Bremsbacken bestehen können, die zwecks Abbremsung in bekannter Weise jeweils gegen die Laufläche der Räder gepreßt werden. Die Bremsmittel können aber auch aus Bremsbacken bestehen, die nach Art einer Scheibenbremse seitlich gegen die Stirnflächen der Räder oder gegen die an den Rädern angebrachten Bremsscheiben gepreßt werden, und schließlich können die Bremsmittel auch aus Bremsbacken bestehen, die seitlich gegen eine spezielle Bremsscheibe, die bereits genannte Bremsscheibe 5, gepreßt werden. Die letztere Art der Bremsung ist die technisch wirkungsvollste. In den Zeichnungen sind die Bremsbacken zwecks Vereinfachung der Figuren nicht weiter dargestellt. Sie sind ohnehin Stand der Technik.

Die Meßvorrichtung ist in den Zeichnungen mit 6 bezeichnet. in bekannter Weise ist dieselbe neben dem Gleise fes instal liert und besteht aus einem hinter einer Optik 6a angeordneten IR-Sensor, dem, entlang einer von dem Sensor und der Optik definierten Meßachse 7, Wärmestrahlen von dem Rad 3a oder der Bremsscheibe 5 zugeführt werden.

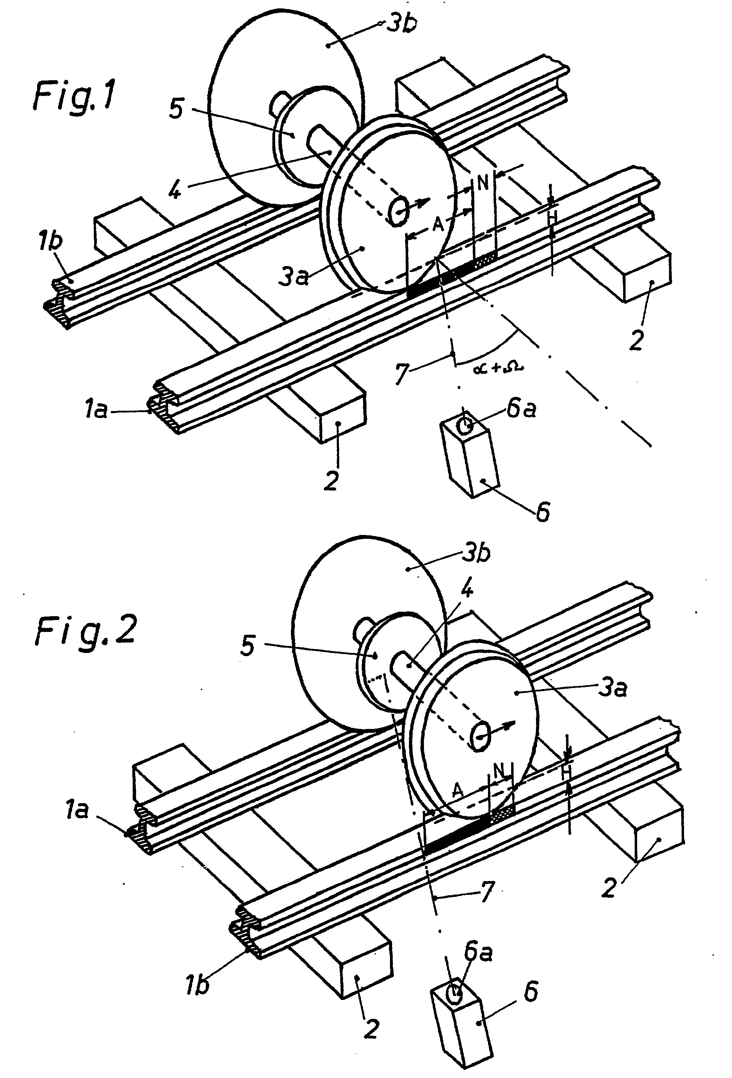

Neben dem Gleis sind Gleisschaltmittel angeordnet,die beim Vorbeilaufen des Radpaares 3a, 3b die Meßvorrichtung aktivieren. D.h. nur während dieser Aktivzeit der Meßvorrichtung erfolgt eine Messung der Bremsentemperatur. Die Gleisschaltmittel sind in den Fig. 1 und 2 - wiederum aus Gründen der Zeichnungsvereinfachung - nicht gezeigt. Schematisch dargestellt ist aber ihre Wirkungsstrecke, die in beiden Figuren jeweils mit A bezeichnet ist. Innerhalb dieser Strecke ist die Meßvorrichtung (zunächst) für eine Temperaturmessung aktiviert.

Die Meßvorrichtung 6 mit ihrer Meßachse 7 ist nun gemäß der Erfindung derart neben dem Gleis installiert, daß

a) die Meßachse 7 das Rad 3a in einer Höhe H = 1 cm bis 5 cm oberhalb der Schienenoberfläche schneidet,
b) die Meßachse 7 mit der horizontal auf den Schienen stehenden Senkrechten einen Winkel $\Omega$ von 7 - 18 Grad einschließt,,
c) die Meßachse 7 unter einem Winkel $\alpha$ von 10 - 22 Grad zur Horizontalen nach unten geneigt verläuft.

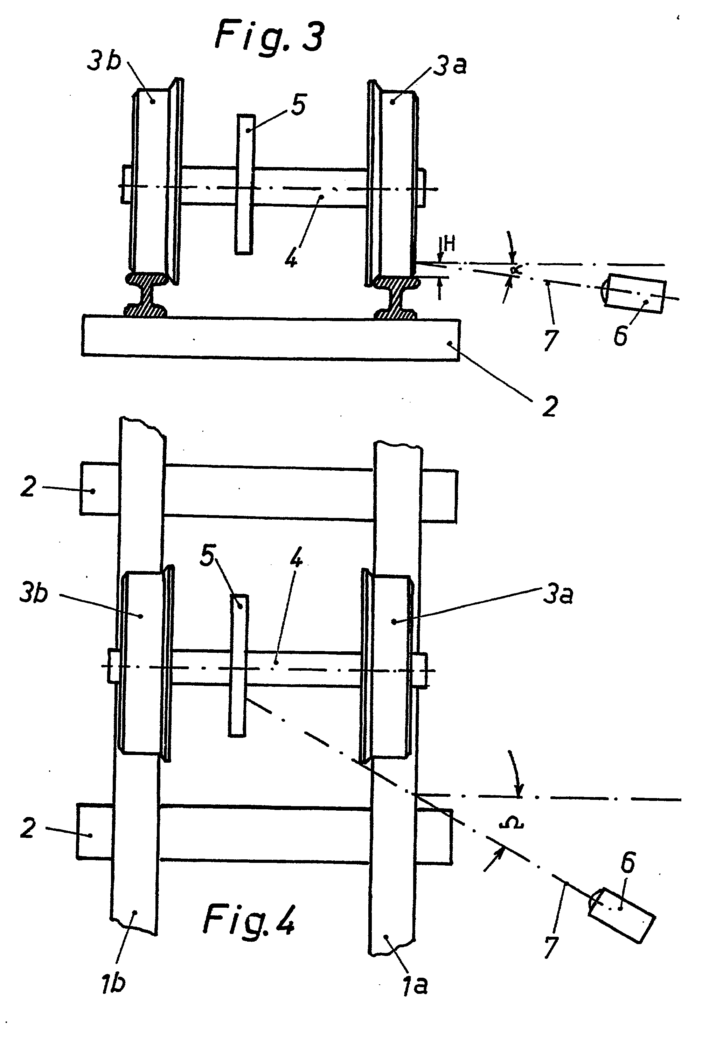

Die Anordnung der Meßvorrichtung unter diesen Winkeln bewirkt, daß die Meßvorrichtung mit ihrer Achse 7 quasi schräg von hinten-unten auf das vorbeilaufende Rad 3a sieht. In der Fig.1 sind diese beiden Winkel zu einem Winkel $\alpha + \Omega$ zusammengefaßt, unter dem sie in dieser perspektivischen Darstellung erscheinen. In Fig.3 ist der Höhenwinkel $\alpha$ in seiner Abweichung von der Horizontalen direkt dargestellt, und in Fig.4 ist der Seitenwinkel $\Omega$ in Relation zu einer Senkrechten auf die Schiene 1a gezeigt.

Der Meßvorgang der gezeigten Meßvorrichtung ist nun folgender: In Fig.1 ist der Augenblick gezeigt, in dem das Rad 3a an das Gleisschaltmittel soweit herangelaufen ist, daß von diesem die Meßvorrichtung aktiviert wird (= Beginn der Strecke A). Dies ist gleichzeitig der Augenblick, in dem die Meßachse 7 beginnt auf den Radkranz des Rades 3a zu treffen, so daß die Temperaturmessung anfängt.

Wie ersichtlich erfolgt die Temperaturmessung nicht unmittelbar an den Bremsbacken selbst, sondern an dem genannten Radkranz, und auch an diesem erst, nachdem der Radkranz die Meßachse 7 um einen geringen, hier nicht weiter dargestellten Betrag durchlaufen hat. Dies geschieht, weil sowohl die Backen- als auch die Scheibenbremsen bei ihrer Anlage am Rad einen Funkenflug erzeugen, der geeignet ist, eine höhere Temperatur vorzutäuschen, als sie die Bremse bzw. der Radkranz tatsächlich hat.

Die Messung der Temperatur erfolgt nun fortlaufend in Impulsen; d.h. die vom Rad abgestrahlten Wärmestrahlen werden vor ihrem Auftreffen auf den IR-Sensor zerhackt (gechoppt). Diese Art der Temperaturmessung ist jedoch Stand der Technik, so daß si ch eine näheres Eingehen hierauf erübrigt.

Die Messung würde an sich geschehen, bis das Rad 3a wieder aus der Strecke A auslaufen und gleichzeitig die Meßachse 7 vom Radkranz abgleiten würde, denn dann wäre die von den Gleisschaltmitteln bestimmte Aktivzeit der Meßvorrichtung beendet.

Die Meßvorrichtung ist jedoch gemäß der Erfindung mit einer elektronischen Schaltung versehen, welche die Aktivzeit der Meßvorrichtung auf elektrischem Wege um einen Faktor N verlängert. Auch innerhalb dieser Zeit ist die Meßvorrichtung noch aktiviert, nur eben nicht durch die Gleisschaltmittel sondern quasi künstlich, elektronisch.

Wie aus Fig.2 ersichtlich, springt in dieser Verlängerungsphase N die Meßachse 7 von dem Radkranz über auf die Bremsscheibe 5. In der Verlängerungsphase N wird somit die Temperatur dieser Bremsscheibe 5 angemessen.

Mit der Vorrichtung plus elektronischer Zusatzschaltung kann somit die Temperatur aller gängigen Bremssysteme zuverlässig gemessen werden, wobei sogar noch die zusätzliche Aussage möglich ist, ob die Temperatur der am Rad selbst angreifenden Bremsen (Bremsbacken, Scheibenbackenbremsen) oder ob die Temperatur einer gesonderten Bremsscheibe 5 gemessen wurde. Tritt nämlich der Spitzenwert der Temperatur innerhalb der von den Gleisschaltmitteln geschalteten Aktivzeit der Meßvorrichtung auf, so stammt dieser Spitzenwert offensichtlich vom Rad selbst; tritt er dagegen innerhalb der Verlängerungszeit N auf, so stammt er eindeutig von der gesonderten Bremsscheibe.

**Patentansprüche**

Vorrichtung (6) zum berührungslosen Messen der Bremsentemperaturen an vorüberfahrenden Eisenbahnwagen, bei der einem IR-Sensor durch eine vorgeschaltete Optik entlang einer durch den Sensor und die Optik definierten Meßachse von den Bremsen (5) bzw. dem Rad (3a, 3b) emittierte IR-Strahlen zugeleitet werden, wobei die schräg angeordnete Meßachse (7) den Radkranz oberhalb der Schienenoberfläche trifft und Gleisschaltmittel zur Aktivierung der Meßvorrichtung (6) vorgesehen sind, gekennzeichnet durch folgende Merkmale:

a) die Meßachse (7) ist derart auf die vorüberrollenden Räder (3a; 3b) gerichtet, daß sie den Radkranz in einer Höhe (H) zwischen 1 cm und 5 cm oberhalb der Schienenkante trifft,

b) die Meßachse (7) bildet mit der Ebene beider Schienenoberflächen einen Erhebungswinkel (α) zwischen 10 bis 22 Grad,

c) die Meßachse (7) verläuft unter einem Seitenwinkel (Ω) von 7–18 Grad zu einer beide Schienen (1a; 1b) senkrecht schneidenden Linie,

d) es ist ein einziges Gleisschaltmittel vorgesehen, welches die Meßvorrichtung aktiviert, sobald das Rad um eine definierte Strecke in die Meßachse (7) eingelaufen ist, und das ein Signal abgibt, wenn das Rad aus dem Bereich des Gleisschaltmittels ausläuft, und

e) es ist eine elektronische Schaltung vorgesehen, welche die Aktivzeit der Meßvorrichtung um einen Faktor (N) verlängert, nachdem das Rad aus dem Bereich des Gleisschaltmittels ausgelaufen ist.

**Claims**

Device (6) for the contactless measurement of the brake temperatures of railway wagons or coaches travelling past, in which method infra-red rays emitted by the brakes (5) or the wheel (3a, 3b) are conducted to an infra-red sensor through an optical system connected in front thereof and along a measurement axis defined by the sensor and the optical system, wherein the measurement axis (7) is arranged to be inclined and meets the wheel rim above the rail surface and treadles are provided for the activation of the measuring device (6), characterised by the following features:

a) the measurement axis (7) is directed in such a manner towards the wheels (3a; 3b) rolling past that it meets the wheel rim at a height (H) of between 1 centimetre and 5 centimetres above rail edge,

b) the measurement axis (7) forms an angle of elevation (α) of between 10 to 22 degrees with the plane of both rail surfaces,

c) the measurement axis (7) extends at an horizontal angle (Ω) of between 7 to 18 degrees to a line intersecting both rails (1a; 1b) perpendicularly,

d) a single treadle is provided, which activates the measuring device as soon as the wheel has run into the measurement axis (7) through a defined distance and which delivers a signal when the wheel runs out of the range of the treadle, and

e) an electronic circuit is provided, which prolongs the active time of the measuring device by a factor (N) after the wheel has run out of the range of the treadle.

**Revendications**

Dispositif pour la mesure sans contact des températures des freins de voitures de chemin de fer, dans lequel des rayons I.R. émis par le frein (5) ou la roue (3a–3b) sont dirigés sur un détecteur I.R. à travers une optique disposée devant lui, le long d'un axe de mesure défini par ledit détecteur et ladite optique, l'axe de mesure (7) disposé obliquement atteignant le bandage de la roue au-dessus de la surface du rail et des moyens de commutation liés au rail étant prévus pour activer le dispositif de mesure (6), caractérisé par les joints remarquables suivants:

a) l'axe de mesure (7) est orienté de telle manière par rapport aux roues (3a, 3b) qu'il atteint le bandage de la roue à une hauteur (H) comprise entre 1 et 5 cm, au-dessus du sommet du rail;

b) l'axe de mesure (7) forme avec le plan des deux faces supérieures des rails un angle d'élévation (α) compris entre 10° et 22°;

c) l'axe de mesure (7) est orienté selon un angle latéral (Ω) compris entre 7° et 18° par rapport à une ligne coupant perpendiculairement les deux rails (1<u>a</u>, 1<u>b</u>);

d) il est prévu un seul dispositif de commutation lié au rail et qui active le dispositif de mesure dès que la roue a pénétré d'une distance définie dans l'axe de mesure (7), et qui émet un signal lorsque la roue quitte la zone dudit dispositif de commutation, et

e) il est prévu un circuit électronique qui prolonge le temps d'activation du dispositif de mesure d'un facteur (N) lorsque la roue a quitté la zone du dispositif de commutation.

Fig.1

Fig.2

EP 0 265 538 B1

# Fig. 3

Fig. 3

# Fig.4

Fig.4